Europäisches Patentamt

European Patent Office

Office européen des brevets

(11) Veröffentlichungsnummer: **0 078 250**
**B1**

(12) # EUROPÄISCHE PATENTSCHRIFT

(45) Veröffentlichungstag der Patentschrift:
11.07.84

(51) Int. Cl.³: **C 04 B 7/44**, F 27 B 7/20

(21) Anmeldenummer: 82890144.7

(22) Anmeldetag: 07.10.82

(54) Verfahren und Vorrichtung zum Herstellen von Zement.

(30) Priorität: 27.10.81 DD 234385
13.11.81 AT 4882/81

(43) Veröffentlichungstag der Anmeldung:
04.05.83 Patentblatt 83/18

(45) Bekanntmachung des Hinweises auf die Patenterteilung:
11.07.84 Patentblatt 84/28

(84) Benannte Vertragsstaaten:
AT DE FR GB IT

(56) Entgegenhaltungen:
CH - A - 601 128
DE - A - 2 931 590

(73) Patentinhaber: **VOEST-ALPINE Aktiengesellschaft, Werksgelände, A-4010 Linz (AT)**
Patentinhaber: **VEB Schwermaschinenbau-Kombinat Ernst Thälmann Magdeburg, Marienstrasse 20, DDR-3011 Magdeburg (DD)**

(72) Erfinder: **Feige, Fritz, Dr. Ing., Eupener Strasse 11, DDR-4500 Dessau (DD)**
Erfinder: **Krennbauer, Franz, Marcusgang 5, A-4020 Linz (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Herstellen von Zement, bei dem das Rohmehl vor einer Entsäuerung in einem Kalzinator und einem anschliessenden Brennen in einem Ofen in einem mehrstufigen Wärmeaustausch mit Abgasströmen aus dem Ofen und aus dem Kalzinator in zwei parallelen Abgassträngen vorgewärmt wird, wobei der Rohmehlstrom bis zu der dem Kalzinator unmittelbar vorgeordneten, an den Abgasstrom aus dem Ofen angeschlossenen Wärmetauscherstufe abwechselnd von einer Wärmetauscherstufe des einen zu einer Wärmetauscherstufe des anderen Abgasstranges geführt wird, sowie auf eine Vorrichtung zur Durchführung des Verfahrens.

Um einerseits die Entsäuerung im Kalzinator durch eine Verminderung des Kohlendioxid-Partialdruckes und anderseits die Vorwärmung des Rohmehls vor dem Eintritt in den Kalzinator zu verbessern, ist es bekannt (DE-A-29 31 590), den Kalzinator nicht mit dem Ofenabgas, sondern mit der beim Abkühlen des bereits gebrannten Zementklinkers erwärmten Kühlluft zu versorgen und die Abgasströme aus dem Ofen und aus dem Kalzinator in zwei voneinander getrennten, parallelen Abgassträngen eines mehrstufigen Wärmetauschers zu führen, wobei der Rohmehlstrom abwechselnd von einer Wärmetauscherstufe des einen zu einer Wärmetauscherstufe des anderen Stranges bis zum Kalzinator geleitet wird. Aufgrund dieser Massnahmen können die Ofenabgase keinen störenden Einfluss auf die Rohmehlentsäuerung im Kalzinator nehmen. Darüber hinaus wird der Rohmehlstrom vor dem Eintritt in den Kalzinator auf eine höhere Vorwärmtemperatur als bei einflutigen Abgasführungen gebracht, weil die Abgastemperatur des Ofens höher als die Abgastemperatur des Kalzinators liegt.

Nachteilig bei diesem bekannten Verfahren ist allerdings, dass das Rohmehl in zwei dosierten Teilströmen dem Wärmetauscher aufgegeben werden muss, um annähernd gleiche Temperaturverhältnisse der beiden Abgasströme am kalten Ende des Wärmetauschers sicherzustellen. Diese Rohmehl-Teilströme werden zwar wieder vereinigt und gemeinsam zwischen den Wärmetauscherstufen der beiden Abgasstränge hin- und hergeleitet, doch bedingt eine solche Rohmehlführung einen vergrösserten Aufwand. Dazu kommt noch, dass aufgrund der unterschiedlichen Abgastemperaturen und -drücke gesonderte Gebläse für jeden Abgasstrang eingesetzt werden. Schliesslich ergibt sich der weitere Nachteil einer unterschiedlichen Auslegung der Wärmetauschereinheiten der beiden Abgasstränge, weil eine entsprechend höhere Abgasmenge im Kalzinatorstrang anfällt. Ausserdem kann die Konzentration der zum Anbacken neigenden Ballaststoffe im Ofenabgas besondere Massnahmen erfordern, um ein Anbacken in den Wärmetauscherstufen und in den Leitungen zu verhindern.

Der Erfindung liegt somit die Aufgabe zugrunde, diese Mängel zu vermeiden und ein Verfahren zum Herstellen von Zement der eingangs geschilderten Art so zu verbessern, dass der Geräteaufwand wesentlich verringert und die Gefahr eines Anbackens von im Ofengas enthaltenen Ballaststoffen weitgehend vermieden werden kann.

Die Erfindung löst die gestellte Aufgabe dadurch, dass ein Teil des heissen Abgasstromes des Kalzinators dem heissen Abgasstrom aus dem Ofen vor der dem Kalzinator unmittelbar vorgeordneten Wärmetauscherstufe oder in deren Bereich zugemischt wird.

Durch das Zumischen eines Teiles des Abgasstromes aus dem Kalzinator zum Abgasstrom aus dem Ofen können zunächst für beide Abgasstränge gleiche Abgasmengen sichergestellt werden, was gleiche Wärmetauschereinheiten für beide Abgasstränge und damit übereinstimmende Verhältnisse in diesen Abgassträngen ermöglicht. Dadurch wird nicht nur der Geräteaufwand herabgesetzt, sondern auch der thermische Wirkungsgrad verbessert, weil bei sonst gleichen Bedingungen die Austrittstemperatur der Abgasströme vom Massenverhältnis zwischen Rohmehl und Abgas abhängt und der gesamte Rohmehlstrom ungeteilt einer Wärmetauschereinheit des Wärmetauschers aufgegeben werden kann. Aufgrund der weitgehend übereinstimmenden Verhältnisse in beiden Abgassträngen kann auch ein für beide Stränge gemeinsames Gebläse eingesetzt werden. Darüber hinaus wird durch das Zumischen eines Teiles des Kalzinator-Abgasstromes zum Abgasstrom aus dem Ofen eine Verdünnung hinsichtlich der Ballaststoffkonzentration im Ofenabgas erreicht, was die Anbackgefahr weitgehend herabsetzt.

Eine besonders vorteilhafte Möglichkeit, übereinstimmende Verhältnisse in beiden Abgassträngen sicherzustellen, kann in weiterer Ausbildung der Erfindung dadurch erhalten werden, dass ein Teil des heissen Abgasstromes aus dem Ofen vor dem Zumischen des Abgasteilstromes aus dem Kalzinator dem Kalzinator zugeführt wird. Diese Massnahme hat zur Folge, dass auch im Kalzinatorstrang ein Abgas-Mischstrom vorhanden ist, was die Ballaststoffkonzentration weiter vermindert. Ausserdem können durch eine angepasste Steuerung des dem Kalzinator zugeführten Abgasteilstromes aus dem Ofen gleichbleibende Bedingungen für die Vorwärmung und die Vorentsäuerung des Rohmehles gewährleistet werden, wenn zufolge von Schwankungen im Ofenbetrieb sich Änderungen hinsichtlich der Abgasmenge und der Abgastemperatur des Ofens ergeben. Da nur ein Teilstrom der Ofenabgase dem Kalzinator zugeführt wird und der überwiegende Anteil des dem Kalzinator zugeführten Gasstromes aus vorzugsweise vorgewärmter Luft besteht, spielt der nachteilige Einfluss des Ofenabgases auf den Kalziniervorgang dabei in der Praxis keine wesentliche Rolle.

Um die höhere Temperatur der Ofenabgase für eine hohe Vorwärmung des Rohmehls ausnützen zu können, kann das Rohmehl vor der dem Kalzinator unmittelbar vorgeordneten Wärmetauscherstufe dem heissen Abgasstrom aus dem Ofen zugeführt werden, bevor der Abgasstrom des Ofens mit dem Abgasteilstrom des Kalzinators vermischt wird. Mit dem Mischstrom, der gegenüber dem Ofenabgas eine geringere Temperatur aufweist, wird dann das Rohmehl in die in Fliessrichtung des Rohmehls letzte Wärmetauscherstufe geführt, bevor es in den Kalzinator gelangt.

Wird der heisse Abgasteilstrom aus dem Kalzinator in einer anderen Ausbildung der Erfindung dem Abgasstrom aus dem Ofen vor einem Abscheiden des Rohmehls aus dem Kalzinatorabgas zugeführt, so wird mit dem Abgasteilstrom aus dem Kalzinator ein Teilstrom des Rohmehls der dem Kalzinator unmittelbar vorgeordneten Wärmetauscherstufe zugefördert, aus der das bereits durch den Kalzinator geführte Rohmehl mit dem übrigen Rohmehl in den Kalzinator gelangt, so dass die Verweilzeit dieses Gutes und damit der Entsäuerungsgrad vergrössert wird. Dies bedeutet, dass entweder aufgrund einer höheren Entsäuerung im Kalzinator die Ofenausmasse oder bei gleicher Entsäuerung die Kalzinatorausmasse herabgesetzt werden können. Da bekanntlich die Entsäuerung unter anderem von der Korngrösse des Rohmehls abhängt, kann durch ein entsprechendes Sichten erreicht werden, dass vor allem der grobe Kornanteil des Rohmehls im Kreis geführt wird und folglich die Grob- und Feinkornanteile einen gleichen Entsäuerungsgrad aufweisen, wenn sie in den Ofen gelangen.

Zur Durchführung des erfindungsgemässen Verfahrens kann von einer Vorrichtung ausgegangen werden, die aus einem Ofen zum Brennen des entsäuerten Rohmehls und einem dem Ofen vorgelagerten Kalzinator besteht, dem ein mehrstufiger Wärmetauscher vorgeordnet ist, dessen Wärmetauschereinheiten in zwei parallelen, an die Abgasleitungen des Ofens und des Kalzinators angeschlossenen Abgassträngen hintereinandergeschaltet sind, wobei die Austragsleitungen für das Rohmehl der Wärmetauschereinheiten des einen Stranges mit den Aufgabeleitungen der Wärmetauschereinheiten des anderen Stranges abwechselnd verbunden sind. Um einen Teil des Abgasstromes aus dem Kalzinator dem Abgasstrom aus dem Ofen zuführen zu können, ist die Abgasleitung des Kalzinators mit der Abgasleitung des Ofens durch eine mit einem Steuerorgan, z.B. einem Steuerschieber, versehene Abzweigleitung verbunden. Dabei kann über das Steuerorgan die Menge des dem Ofenabgas zugeführten Abgasteilstromes aus dem Kalzinator gesteuert werden.

Ist in Abgasströmungsrichtung vor der Abzweigleitung eine Verbindungsleitung mit einem Steuerorgan zwischen der Abgasleitung des Ofens und dem Kalzinator vorgesehen, so kann heisses Ofenabgas dem Kalzinator zugeführt werden, was einen Abgasmischstrom im Kalzinatorstrang des Wärmetauschers mit dem Vorteil geringerer Konzentration an zum Anbacken neigenden Ballaststoffen in beiden Strängen und übereinstimmender Bedingungen für diese Stränge gewährleistet.

Eine weitere Möglichkeit, den Ofenabgasstrom mit einem Teilstrom des Kalzinators zu mischen, besteht darin, dass der Kalzinator im mittleren Höhenbereich eine tangentiale Austragungsleitung für das Rohmehl und einen Teil des Abgasstromes und im oberen Bereich eine in die unmittelbar vorgeordnete Wärmetauschereinheit mündende Abgasleitung aufweist, wobei die Abgasleitung des Ofens oberhalb der Austragungsleitung an den Kalzinator angeschlossen ist. Durch diese Massnahmen kann eine rasche Vermischung des Ofenabgasstromes und des vom Rohmehl befreiten Teilstromes des Kalzinators gewährleistet werden, was insbesondere dann von grosser Bedeutung ist, wenn die Austragsleitung der in Fliessrichtung des Rohmehls vorletzten Wärmetauschereinheit in Strömungsrichtung des Ofenabgases vor dem Kalzinator in die Abgasleitung des Ofens mündet. Das mit dem Ofenabgas in den oberen Bereich des Kalzinators geförderte Rohmehl kann somit bereits ausserhalb der letzten Wärmetauschereinheit mit dem Abgasstrom innig vermischt werden, so dass der Wärmeübergang und damit der thermische Wirkungsgrad verbessert wird.

In der Zeichnung ist eine Vorrichtung zur Durchführung eines erfindungsgemässen Verfahrens zum Herstellen von Zement beispielsweise dargestellt. Es zeigen:

Fig. 1 eine erfindungsgemässe Vorrichtung in einem Blockschaltbild und

Fig. 2 eine Konstruktionsvariante einer Vorrichtung nach der Erfindung ebenfalls im Blockschaltbild.

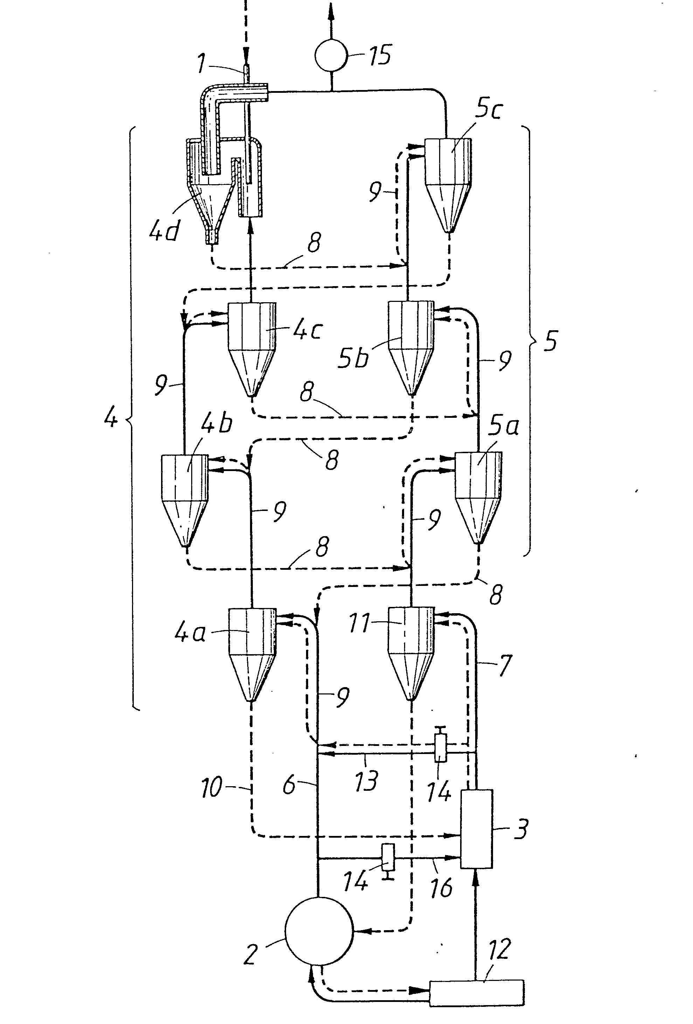

Das Rohmehl, dessen Fliessschema in strichlierten Linien angedeutet ist, wird über eine Aufgabeleitung 1 einem mehrstufigen Wärmetauscher zugeführt, der mit Hilfe der Abgase aus einem Drehrohrofen 2 zum Brennen des vorgewärmten und kalzinierten Rohmehls und der Abgase aus einem dem Drehrohrofen 2 vorgeordneten Kalzinator 3 beheizt wird. Dieser Wärmetauscher weist gemäss Fig. 1 zwei parallele Abgasstränge 4 und 5 auf, die von den als Zyklonen ausgebildeten Wärmetauschereinheiten 4a, 4b, 4c, 4d einerseits und von den Wärmetauschereinheiten 5a, 5b, 5c anderseits gebildet werden.

Wie aus dem in vollen Linien dargestellten Fliessschema für die Abgasströme entnommen werden kann, sind die Abgasstränge 4 und 5 an die Abgasleitungen 6 und 7 des Drehrohrofens 2 und des Kalzinators 3 angeschlossen. Das Rohmehl wird durch die Abgase aus dem Drehrohrofen 2 und dem Kalzinator 3 stufenweise erwärmt, wobei es abwechselnd zwischen den Wärmetauschereinheiten der beiden Abgasstränge 4 und 5 hin- und hergeführt wird, weil die Austragsleitungen 8 der Wärmetauschereinheiten eines jeden Stranges mit den Aufgabeleitungen 9 des jeweils anderen Stranges bis zur Wärmetauschereinheit 4a verbunden sind, deren Austragsleitung 10 im Kalzinator 3 mündet. Das im Kalzinator 3 entsäuerte Rohmehl wird mit dem Abgasstrom aus dem Kalzinator ausgetragen und einem Abscheider 11 zugeführt, in dem das Rohmehl vom Abgasstrom getrennt und anschliessend dem Drehrohrofen 2 zugefördert wird. Die für das Entsäuern erforderliche zusätzliche Wärmemenge wird durch Verbrennen eines Brennstoffes im Kalzinator erzeugt, wobei als Verbrennungsluft vorteilhaft ein Teil der erwärmten Kühlluft aus einem dem Drehrohrofen 2 nachgeordneten Kühler 12 verwendet wird, in dem das im Ofen 2 zu Zementklinker gebrannte Rohmehl abgekühlt wird. Ein anderer Teil der Kühlluft aus dem Kühler 12 wird dem Drehrohrofen 2 als Verbrennungsluft zugeführt.

Im Gegensatz zu bekannten Vorrichtungen ist bei der erfindungsgemässen Vorrichtung nach Fig. 1 die Abgasleitung 7 des Kalzinators 3 mit der Abgasleitung 6 des Drehrohrofens 2 durch eine Abzweigleitung 13 verbunden, die einen Steuerschieber 14 zur Steuerung der Durchflussmenge aufweist. Da die Abzweigleitung 13 bezüglich des Rohmehlstromes vor dem Abscheider 11 liegt, wird mit dem Abgasteilstrom aus dem Kalzinator 3 ein Teil des bereits einem Entsäuerungsvorgang im Kalzinator 3 unterworfenen Rohmehls dem Abgasstrom aus dem Drehrohrofen zugefördert und gelangt in die dem Kalzinator 3 unmittelbar vorgelagerte Wärmetauschereinheit 4a. Damit wird dieser Rohmehlanteil in einem Kreislauf wieder dem Kalzinator 3 zugeführt, so dass die Verweilzeit im Kalzinator 3 und damit der Entsäuerungsgrad entsprechend erhöht wird. Wird ein solcher Kreislauf einer Teilmenge des Rohmehls nicht gewünscht, so kann die Abzweigleitung 13 dem Abscheider 11 in der Abgasleitung 7 des Kalzinators 3 nachgeordnet werden. In diesem Fall wird lediglich der Vorteil ausgenützt, dass dem Ofenabgas ein Teil des Abgasstromes aus dem Kalzinator zugemischt wird, was gleiche Abgasmengen in beiden Abgassträngen 4 und 5 ermöglicht, da nur etwa zwei Drittel des Abgasstromes aus dem Kalzinator an Ofenabgas anfallen.

Mit den in dieser Weise erreichten, übereinstimmenden Verhältnissen für beide Abgasstränge 4 und 5 ergeben sich gleiche Wärmetauschereinheiten für die beiden Abgasstränge 4 und 5, die demnach an ein gemeinsames Abgasgebläse 15 angeschlossen werden können.

Dass mit dem Zumischen eines Teiles des Abgasstromes aus dem Kalzinator 3 zum Ofenabgas die Konzentration von zum Anbacken neigenden Ballaststoffen des Ofenabgases herabgesetzt wird, ist ein weiterer Vorteil der geschilderten Abgasführung. Dieser Effekt kann noch dadurch vergrössert werden, dass in Strömungsrichtung vor der Abzweigleitung 13 zwischen der Abgasleitung 6 des Ofens 2 und dem Kalzinator 3 eine zusätzliche Verbindungsleitung 16 vorgesehen wird, über die heisses Ofenabgas dem Kalzinator zugeführt werden kann. Die dem Kalzinator 3 zugeführte Abgasmenge aus dem Ofen 2 kann wiederum mit einem Steuerschieber 14 den Erfordernissen entsprechend gewählt werden. Die Verbindungsleitung 16 stellt auch für den Kalzinatorstrang 5 einen Abgas-Mischstrom sicher, der die Übereinstimmung hinsichtlich der Betriebsverhältnisse in den beiden Abgassträngen 4 und 5 weiter verbessert.

Selbstverständlich kann über die Verbindungsleitung 16 auch Rauchgas aus dem Kalzinator 3 dem Drehrohrofen 2 zugeleitet werden, wenn in Sonderfällen wegen zu hoher Schadstoffbelastungen ein Teil des Ofenabgases abgezogen werden muss.

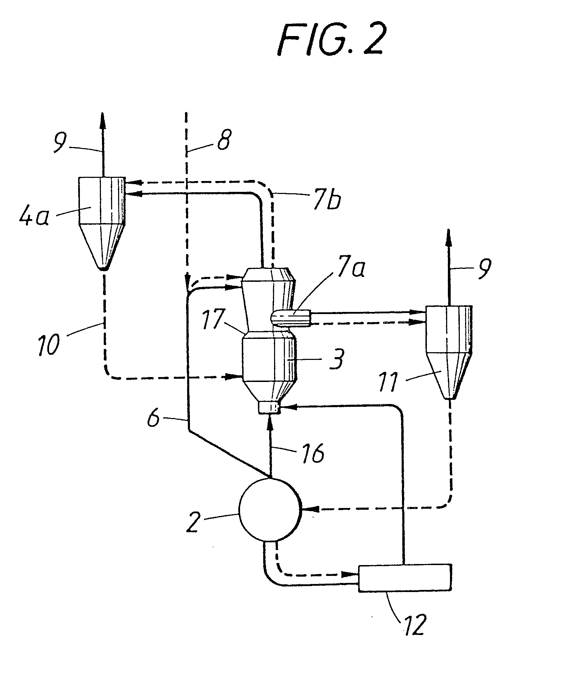

Die Vorrichtung nach Fig. 2 unterscheidet sich von der gemäss Fig. 1 dadurch, dass der Kalzinator 3 im mittleren Bereich oberhalb einer Einschnürung 17 eine tangentiale Austragungsleitung 7a aufweist, die den Rohmehlstrom mit einem Teil des Abgasstromes dem Abscheider 11 zuführt, von dem der Abgasstrom aus dem Kalzinator dem Abgasstrang 5 zugeleitet wird, während das abgeschiedene Rohmehl zum Ofen 2 gelangt. Das Ofenabgas wird über die Abgasleitung 6, in die die Austragsleitung 8 der in Fliessrichtung vorletzten Wärmetauschereinheit 5a (siehe Fig. 1) mündet, oberhalb der Austragungsleitung 7a in den Kalzinator 3 geleitet, wo eine rasche und innige Mischung mit dem vom Rohmehl befreiten Teilstrom des Kalzinatorabgases stattfindet. Über die Abgasleitung 7b wird dann der Abgasmischstrom mit dem Rohmehl der letzten, dem Kalzinator unmittelbar vorgeordneten Wärmetauschereinheit 4a zugeführt. Damit kann in besonders vorteilhafter Weise die fühlbare Abwärme der Abgasströme ausgenützt werden.

Um ein gleichmässiges Aufteilen der Abgasströme auf beide Wärmetauscherstränge 4 und 5 sicherzustellen, kann wieder ein Teil des Ofenabgases über eine Zweigleitung 16 dem Kalzinator 3 unmittelbar zugeführt werden. Zur Steuerung der einzelnen Gasströme sind selbstverständlich entsprechende Steuerungseinrichtungen vorgesehen, die jedoch aus Übersichtlichkeitsgründen nicht eingezeichnet sind.

**Patentansprüche**

1. Verfahren zum Herstellen von Zement, bei dem das Rohmehl vor einer Entsäuerung in einem Kalzinator (3) und einem anschliessenden Brennen in einem Ofen (2) in einem mehrstufigen Wärmeaustausch mit Abgasströmen aus dem Ofen (2) und aus dem Kalzinator (3) in zwei parallelen Abgassträngen (4, 5) vorgewärmt wird, wobei der Rohmehlstrom bis zu der dem Kalzinator (3) unmittelbar vorgeordneten, an den Abgasstrom aus dem Ofen (2) angeschlossenen Wärmetauscherstufe (Wärmetauschereinheit 4a) abwechselnd von einer Wärmetauscherstufe des einen zu einem Wärmetauscherstufe des anderen Abgasstranges (4, 5) geführt wird, dadurch gekennzeichnet, dass ein Teil des heissen Abgasstromes des Kalzinators (3) dem heissen Abgasstrom aus dem Ofen (2) vor der dem Kalzinator (3) unmittelbar vorgeordneten Wärmetauscherstufe (Wärmetauschereinheit 4a) oder in deren Bereich zugemischt wird.

2. Verfahren nach Anspruch 1, dadurch gekennzeichnet, dass ein Teil des heissen Abgasstromes aus dem Ofen (2) vor dem Zumischen des Abgasteilstromes aus dem Kalzinator (3) dem Kalzinator (3) zugeführt wird.

3. Verfahren nach Anspruch 1, dadurch gekennzeichnet, dass das Rohmehl vor der dem Kalzinator (3) unmittelbar vorgeordneten Wärmetauscherstufe (Wärmetauschereinheit 4a) dem heissen Abgastrom aus dem Ofen (2) zugeführt wird, bevor der Abgasstrom des Ofens (2) mit dem Abgasteilstrom des Kalzinators (3) vermischt wird.

4. Verfahren nach Anspruch 1 oder 2, dadurch gekennzeichnet, dass der heisse Abgasteilstrom aus dem Kalzinator (3) dem Abgasstrom aus dem Ofen (2) vor einem Abscheiden des Rohmehls aus dem Kalzinatorabgas zugeführt wird.

5. Vorrichtung zur Durchführung des Verfahrens nach einem der Ansprüche 1 bis 4 mit einem Ofen (2) zum Brennen des entsäuerten Rohmehls und einem dem Ofen (2) vorgelagerten Kalzinator (3), dem ein mehrstufiger Wärmetauscher vorgeordnet ist, dessen Wärmetauschereinheiten (4a, 4b, 4c, 4d, 5a, 5b, 5c) in zwei parallelen, an die Abgasleitungen (6, 7) des Ofens (2) und des Kalzinators (3) angeschlossenen Abgassträngen (4, 5) hintereinandergeschaltet sind, wobei die Austragsleitungen (8) für das Rohmehl der Wärmetauschereinheiten des einen Stranges (4 bzw. 5) mit den Aufgabeleitungen (9) der Wärmetauschereinheiten des anderen Stranges (5 bzw. 4) abwechselnd verbunden sind, dadurch gekennzeichnet, dass die Abgasleitung (7) des Kalzinators (3) mit der Abgasleitung (6) des Ofens (2) durch eine mit einem Steuerorgan, z.B. einem Steuerschieber (14), versehene Abzweigleitung (13) verbunden ist.

6. Vorrichtung nach Anspruch 4, dadurch gekennzeichnet, dass in Abgasströmungsrichtung vor der Abzweigleitung (13) eine Verbindungsleitung (16) mit einem Steuerorgan (14) zwischen der Abgasleitung (6) des Ofens (2) und dem Kalzinator (3) vorgesehen ist.

7. Vorrichtung zur Durchführung des Verfahrens nach einem der Ansprüche 1 bis 4 mit einem Ofen (2) zum Brennen des entsäuerten Rohmehls und einem dem Ofen (2) vorgelagerten, vertikalen Kalzinator (3), dem ein mehrstufiger Wärmetauscher vorgeordnet ist, dessen Wärmetauschereinheiten (4a, 4b, 4c, 4d, 5a, 5b, 5c) in zwei parallelen, an die Abgasleitungen (6, 7a, 7b) des Ofens (2) und des Kalzinators (3) angeschlossenen Abgassträngen (4, 5) hintereinandergeschaltet sind, wobei die Austragsleitungen (8) für das Rohmehl der Wärmetauschereinheiten des einen Stranges (4 bzw. 5) mit den Aufgabeleitungen (9) der Wärmetauschereinheiten des anderen Stranges (5 bzw. 4) abwechselnd verbunden sind, dadurch gekennzeichnet, dass der Kalzinator (3) im mittleren Höhenbereich eine tangentiale Austragungsleitung (7a) für das Rohmehl und einen Teil des Abgasstromes und im oberen Bereich eine in die unmittelbar vorgeordnete Wärmetauschereinheit (4a) mündende Abgasleitung (7b) aufweist, wobei die Abgasleitung (6) des Ofens (2) oberhalb der Austragungsleitung (7a) an den Kalzinator (3) angeschlossen ist.

8. Vorrichtung nach Anspruch 7, dadurch gekennzeichnet, dass die Austragsleitung (8) der in Fliessrichtung des Rohmehls vorletzten Wärmetauschereinheit (5a) in Strömungsrichtung des Ofenabgases vor dem Kalzinator (3) in die Abgasleitung (6) des Ofens (2) mündet.

## Claims

1. A process of making cement in which the ground raw material is de-acidified in a calcinator (3) and subsequently burnt in a kiln (2) and before its de-acidification is preheated in two parallel exhaust gas lines (4, 5) by a multi-stage heat exchange with exhaust gas streams from the kiln (2) and the calcinator (3), wherein the ground raw material is conducted from a heat exchanger stage of one exhaust gas line to a heat exchanger stage of the other exhaust gas line (4, 5) in alternation until the ground raw material has reached that heat exchanger stage (heat exchanger unit 4a) which directly precedes the calcinator (3) and is connected to the exhaust gas outlet from the kiln (2), characterized in that part of the hot exhaust gas stream from the calcinator (3) is admixed to the hot exhaust gas stream from the kiln (2) before or adjacent to the heat exchanger stage (heat exchanger unit 4a) which directly precedes the calcinator (3).

2. A process according to claim 1, characterized in that part of the hot exhaust gas stream from the kiln (2) is fed to the calcinator (3) before the admixing of the partial exhaust gas stream from the calcinator (3).

3. A process according to claim 1, characterized in that the ground raw material is fed to the hot exhaust gas stream from the kiln (2) before the ground raw material is fed to the heat exchanger stage (heat exchanger until 4a) which directly precedes the calcinator (3) and before the exhaust gas stream from the kiln (2) is mixed with the partial exhaust gas stream from the calcinator (3).

4. A process according to claim 1 or 2, characterized in that the hot partial exhaust gas stream from the calcinator (3) is fed to the exhaust gas stream from the kiln (2) before the ground raw material is separated from the exhaust gas from the calcinator.

5. Apparatus for carrying out the process according to any of claims 1 to 4, comprising a kiln (2) for burning the de-acidified ground raw material, a calcinator (3) preceding the kiln (2), and a multi-stage heat exchanger, which precedes the calcinator and comprises heat exchanger units (4a, 4b, 4c, 4d, 5a, 5b, 5c), which are connected in series in two parallel exhaust gas lines (4, 5), which are connected to the exhaust gas conduits (6, 7) of the kiln (2) and the calcinator (3), wherein the ground raw material discharge conduits (8) of the heat exchange units of one exhaust gas line (4 or 5) are connected in alternation to the feed conduits (9) of the heat exchange units of the other exhaust gas line (5 or 4), characterized in that the exhaust gas conduit (7) of the calcinator (3) is connected to the exhaust gas conduit (6) of the kiln (2) by a branch conduit (13), which is provided with a control valve, for instance, a sliding valve (14).

6. Apparatus according to claim 4, characterized in that a connecting conduit (16) including a control valve (14) is provided between the exhaust gas conduit (6) of the kiln (2) and the calcinator (3) and precedes the branch conduit (13) in the direction of flow of the exhaust gas.

7. Apparatus for carrying out a process according to any of claims 1 to 4, comprising a kiln (2) for burning the de-acidified ground raw material, a vertical calcinator (3) preceding the kiln (2), and a multi-stage heat exchanger, which precedes the calcinator and comprises heat exchanger units (4a, 4b, 4c, 4d, 5a, 5b, 5c), which are connected in series in two parallel exhaust gas lines (4, 5), which are connected to the exhaust gas conduits (6, 7a, 7b) of the kiln (2) and the calcinator (3), wherein the ground raw material discharge conduits (8) of the heat exchange units of one exhaust gas line (4 or 5) are connected in alternation to the feed conduits (9) of the heat exchange units of the other exhaust gas line (5 or 4), characterized in that the calcinator (3) has in an intermediate portion of its height a tangential discharge line (7a) for the ground raw material and part of the exhaust gas stream and has in its upper portion an exhaust gas conduit (7b) which opens into the directly preceding heat exchange unit (4a) and the exhaust gas conduit (6) of the kiln (2) is connected to the calcinator (3) above the discharge conduit (7a).

8. Apparatus according to claim 7, characterized in that the discharge conduit (8) of the last but one heat exchanger unit (5a) in the direction of flow of the ground raw material opens into the exhaust gas conduit (6) of the kiln (2) before the calcinator in the direction of flow of the exhaust gas from the kiln.

**Revendications**

1. Procédé pour fabriquer du ciment, par lequel la farine crue est préchauffée par un échange de chaleur en plusieurs étages avec des flux de gaz de combustion provenant du four (2) et du calcinateur (3) par deux branches parallèles (4, 5) de gaz de combustion avant toute désacidification dans un calcinateur (3) et toute calcination consécutive dans un four (2), tandis que le flux de farine crue est conduit alternativement d'un étage d'échangeur de chaleur de l'une des branches (4, 5) de gaz de combustion à un étage d'échangeur de chaleur de l'autre branche jusqu'à l'étage d'échangeur de chaleur (unité 4a d'échangeur de chaleur) qui est prévu immédiatement devant le calcinateur (3) et branché sur le flux de gaz de combustion provenant du four (2), procédé caractérisé par le fait qu'une partie de flux chaud de gaz de combustion du calcinateur (3) est ajoutée et mélangée au flux chaud de gaz de combustion provenant du four (2) avant l'étage d'échangeur de chaleur (unité 4a d'échangeur de chaleur) prévu immédiatement devant le calcinateur (3) ou dans la zone dudit étage.

2. Procédé selon la revendication 1, caractérisé par le fait qu'une partie du flux chaud de gaz de combustion provenant du four (2) est amenée au calcinateur (3) avant l'addition et le mélange de la partie de flux de gaz de combustion provenant du calcinateur (3).

3. Procédé selon la revendication 1, caractérisé par le fait que la farine crue est amenée, avant l'étage d'échangeur de chaleur (unité 4a d'échangeur de chaleur) prévu immédiatement devant le calcinateur (3), au flux chaud de gaz de combustion provenant du four (2) avant que le flux de gaz de combustion du four (2) soit mélangé à la partie de flux de gaz de combustion du calcinateur (3).

4. Procédé selon la revendication 1 ou 2, caractérisé par le fait que la partie de flux chaud de gaz de combustion provenant du calcinateur (3) est amenée au flux de gaz de combustion provenant du four (2) avant une séparation de la farine crue des gaz de combustion de calcinateur.

5. Dispositif prévu pour mettre en œuvre le procédé suivant l'une quelconque des revendications 1 à 4, comportant un four (2) pour griller la farine crue décarbonatée et un calcinateur (3) installé en amont du four (2) et précédé d'un échangeur de chaleur à étages multiples dont les unités d'échangeur de chaleur (4a, 4b, 4c, 4d, 5a, 5b, 5c) sont montées en série l'une derrière l'autre dans deux branches parallèles (4, 5) de gaz de combustion branchées sur les conduites (6, 7) à gaz de combustion du four (2) et du calcinateur (3), tandis que les conduites d'extraction (8) pour la farine crue prévues sur les unités d'échangeur de chaleur de l'une des branches (4 ou 5) sont reliées en alternance aux conduites d'alimentation (9) des unités d'échangeur de chaleur de l'autre branche (5 ou 4), dispositif caractérisé par le fait que la conduite (7) à gaz de combustion du calcinateur (3) est reliée à la conduite (6) à gaz de combustion du four (2) par une conduite (13) de dérivation munie d'un organe de distribution, par exemple d'un tiroir de distribution (14).

6. Dispositif selon la revendication 4, caractérisé par le fait qu'une conduite de communication (16) avec un organe de distribution (14) est prévue, en regardant dans le sens de l'écoulement des gaz de combustion, avant la conduite (13) de dérivation entre la conduite (6) à gaz de combustion du four (2) et le calcinateur (3).

7. Dispositif pour la mise en œuvre du procédé selon l'une des revendications 1 à 4, comportant un four (2) pour griller la farine crue décarbonatée et un calcinateur (3) vertical installé en amont du four (2) et précédé d'un échangeur de chaleur à étages multiples dont les unités d'échangeur de chaleur (4a, 4b, 4c, 4d, 5a, 5b, 5c) sont montées en série l'une derrière l'autre dans deux branches (4, 5) de gaz de combustion parallèles branchées sur les conduites (6, 7a,7b) à gaz de combustion du four (2) et du calcinateur (3), tandis que les conduites d'extraction (8) pour la farine crue prévues sur les unités d'échangeur de chaleur de l'une des branches (4 ou 5) sont reliées en alternance aux conduites d'alimentation (9) des unités d'échangeur de chaleur de l'autre branche (5 ou 4), dispositif caractérisé par le fait que, dans la zone à mi-hauteur, le calcinateur (3) présente une conduite d'extraction (7a) tangentielle pour la farine crue et une partie du flux de gaz de combustion et, dans la zone supérieure, une conduite (7b) à gaz de combustion débouchant dans l'unité (4a) d'échangeur de chaleur installée immédiatement devant le calcinateur (3), tandis que la conduite (6) à gaz de combustion du four (2) est branchée sur le calcinateur (3) au-dessus de la conduite d'extraction (7a).

8. Dispositif selon la revendication 7, caractérisé par le fait que la conduite d'extraction (8) de l'unité (5a) d'échangeur de chaleur, qui est l'avant-dernière dans le sens de l'écoulement de la farine crue, débouche, en regardant dans le sens de l'écoulement du gaz de combustion du four, dans la conduite (6) à gaz de combustion du four (2) devant le calcinateur (3).

0 078 250

# FIG. 2